(19) Europäisches Patentamt
European Patent Office
Office européen des brevets

(11) **EP 3 919 739 A1**

(12) **EUROPEAN PATENT APPLICATION**

(43) Date of publication:
**08.12.2021 Bulletin 2021/49**

(51) Int Cl.:
*F03D 7/04* *(2006.01)*      *G05B 13/04* *(2006.01)*

(21) Application number: **20382470.1**

(22) Date of filing: **02.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy Innovation & Technology S.L.**
**31621 Sarriguren (Navarra) (ES)**

(72) Inventors:
• **Arellano Aguado, Jesus**
**31012 Pamplona (ES)**
• **Barreras Carracedo, Marta**
**31007 Pamplona (ES)**
• **Díaz de Corcuera Martinez, Asier**
**01002 Vitoria (ES)**
• **Elso Torralba, Jorge**
**31007 Pamplona (ES)**

(74) Representative: **Aspacher, Karl-Georg**
**Siemens Gamesa Renewable Energy GmbH & Co. KG**
**Otto-Hahn-Ring 6**
**81739 München (DE)**

(54) **ROBUST CONTROL OF WIND TURBINES WITH SOFT-SOFT TOWER**

(57)      A controller for a wind turbine comprising a rotor and a nacelle arranged on a tower is described, the tower having a fundamental frequency close to or below a rated rotational frequency of the rotor. The controller comprises a rotor speed control module (1) comprising a first linear time invariant control system (10) adapted to generate a first pitch control signal (P1) based on a rotor speed error signal (11), a tower damping module (2) comprising a second linear time invariant control system (20) adapted to generate a second pitch control signal (P2) based on a nacelle acceleration signal (17), and an output module adapted to output a pitch control signal based on the first pitch control signal and the second pitch control signal. Furthermore, a wind turbine and a method of controlling a wind turbine are described.

FIG 1

## Description

Field of Invention

The present invention relates to the field of wind turbines, in particular to a controller for a wind turbine comprising a rotor and a nacelle arranged on a tower, the tower having a fundamental frequency close to or below a rated rotational frequency of the rotor.

Art Background

Over the last years, tall wind turbine towers have become very popular due to the demand for higher power production opportunities at sites with typically low to medium wind speeds.

However, tall towers incur higher costs in relation to manufacturing, construction and installation. Then, the choice of tower height is based on a trade-off between energy production and cost of construction to optimize Levelized Cost of Energy (LCOE). For this reason, material alleviation is especially interesting in tall tower designs leading to soft-soft tower solutions which can significantly reduce production costs.

Towers are usually classified based on the relative natural frequencies, which mainly depend on total tower height and weight. Thus, material reduction leads to soft-soft tower designs whose fundamental natural frequency is lower than 1P rotor rotational frequency. As wind turbines increase in size and decrease in weight, they lead to challenges not only related to the structural design but also to the control strategy. Frequencies of tower natural modes drop, moving towards frequency bands where wind turbine closed-loop control operates to regulate the power production. In addition, frequencies of soft-soft tower structural modes and nP rotor rotational frequencies can become closer, increasing structural mechanical loading due to their interaction. This particular dynamic behaviour of soft-soft towers imposes important limitations to the classical control strategies used in wind turbines. Required control performance values to design wind turbines with soft-soft towers cannot be achieved by using these classical control strategies, so the structural integrity of these wind turbines might not be guaranteed.

There may thus be a need for new ways of controlling wind turbine generators in order to overcome the above-mentioned problems.

Summary of the Invention

This need may be met by the subject matter according to the independent claims. Advantageous embodiments of the present invention are described by the dependent claims.

According to a first aspect of the invention, there is provided a controller for a wind turbine comprising a rotor and a nacelle arranged on a tower, the tower having a fundamental frequency close to or below a rated rotational frequency of the rotor. The controller comprises (a) a rotor speed control module comprising a first linear time invariant control system adapted to generate a first pitch control signal based on a rotor speed error signal, (b) a tower damping module comprising a second linear time invariant control system adapted to generate a second pitch control signal based on a nacelle acceleration signal, and (c) an output module adapted to output a pitch control signal based on the first pitch control signal and the second pitch control signal.

This aspect of the invention is based on the idea that a first linear time invariant control module is used to generate a first pitch control signal based on a rotor speed error signal while a second linear time invariant control module is used to generate a second pitch control signal based on a nacelle acceleration signal. The resulting pitch control signal is provided by an output module on the basis of the first and second pitch control signals. Thereby, the resulting pitch control signal takes into account both the rotor speed error and the movement of the nacelle caused by tower oscillating movement. By using first and second linear time invariant control systems, it is possible to provide robust control of the wind turbine without interference from tower oscillations having frequencies close to the rated rotational frequency of the rotor. Such robust control is not possible with known controllers utilizing e.g. PI (proportional-integral) and/or PID (proportional-integral-derivative) and traditional specifications based on stability margins, bandwidth and step responses.

In the present context, the term "pitch control signal" may in particular denote a signal that can be used to control the pitch angle of a wind turbine blade, preferably in form of a change or adjustment (incremental/decremental value) to be applied to the pitch angle. Alternatively, the pitch control signal may indicate a pitch angle to be set. This also applies to the terms "first pitch control signal" and "second pitch control signal".

In the present context, the term "rotor speed error signal" may in particular denote a signal indicative of a difference between desired rotor speed (set point value) and actual rotor speed. The set point value is determined by the wind turbine controller and the actual rotor speed is measured by an appropriate sensor system, such as an optical or magnetic sensor system.

In the present context, the term "nacelle acceleration signal" may in particular denote a signal indicative of the nacelle acceleration in one or more directions. The nacelle acceleration signal may be provided by an appropriate sensor, such as an accelerometer, arranged at or in the nacelle. According to an embodiment of the invention, the first linear time invariant control system comprises a plurality of first linear time invariant control units and a first interpolation unit, wherein the first interpolation unit is adapted to generate the first pitch control signal based on an interpolation of respective outputs of the first linear time invariant control units.

The use of multiple first linear time invariant control units and a first interpolation unit that provides an interpolating based on the outputs of the respective first linear time invariant control units makes it possible to improve the resulting control, in particular when each of the first linear time invariant control units is optimized for certain operating conditions. Thereby, the output (first pitch control signal) obtained for operating conditions falling between or outside the optimum operating conditions of the respective first linear time invariant control units will be more precise.

According to a further embodiment of the invention, the second linear time invariant system comprises a plurality of second linear time invariant control units and a second interpolation unit, wherein the second interpolation unit is adapted to generate the second pitch control signal based on an interpolation of respective outputs of the second linear time invariant control units.

The use of multiple second linear time invariant control units and a second interpolation unit that provides an interpolating based on the outputs of the respective second linear time invariant control units makes it possible to improve the resulting control, in particular when each of the second linear time invariant control units is optimized for certain operating conditions. Thereby, the output (second pitch control signal) obtained for operating conditions falling between or outside the optimum operating conditions of the respective second linear time invariant control units will be more precise.

According to a further embodiment of the invention, the first and/or second interpolation unit is adapted to apply interpolation based on an operating point of the wind turbine, in particular based on the pitch control signal and/or a (measured or estimated) wind speed signal.

In other words, the first and/or second interpolation unit considers the current operating point of the wind turbine when selecting and/or weighting the first and/or second linear time invariant control units for the interpolation.

According to a further embodiment of the invention, the plurality of first linear time invariant control units is a plurality of first state space control units, and/or the plurality of second linear time invariant control units is a plurality of second state space control units.

In other words, each (first and/or second) linear time invariant control unit may utilize calculations based on two equations of the form

$$x(k+1) = A*x(k) + B*u(k)$$

$$p(k+1) = C*x(k) + D*u(k)$$

Here, x(k+1) is the current vector of controller states, x(k) is the previous vector of controller states, p(k+1) is the current pitch angle control signal, and u(k) is the previous input vector (measurement values, in particular rotor speed error and/or nacelle acceleration). Furthermore, A, B, C, and D are state space matrices.

Alternatively, some or all linear time invariant control units may be implemented as transfer functions or zero-pole-gain units.

According to a further embodiment of the invention, the nacelle acceleration signal is indicative of a fore-aft acceleration of the nacelle.

In other words, the nacelle acceleration signal indicates the acceleration of the nacelle in the wind direction or at least in a direction very close to the wind direction if the wind turbine is not pointing directly into the wind.

According to a further embodiment of the invention, the tower damping module is adapted to dampen the 1st fore-aft eigen mode of the tower.

In other words, the tower damping module functions to reduce or ideally remove the changes in effective wind speed that occurs when the nacelle oscillates back and forth in the direction of the wind.

According to a further embodiment of the invention, the output module is adapted to add the first and second pitch control signals to generate the pitch control signal.

According to a further embodiment of the invention, the tower damping module further comprises a moving notch filter adapted to filter a selected multiple of the rotor rotational frequency from the second pitch control signal.

Thereby, it is assured that the controller will not react at the selected multiple of the rotor rotational frequency.

According to a further embodiment of the invention, the tower damping module further comprises a phase delay network adapted to apply a gain over a frequency range to the second pitch control signal in dependency of an operating point of the wind turbine, in particular based on the pitch control signal and/or a filtered wind speed signal.

According to a further embodiment of the invention, the first linear time invariant control system is further adapted to generate the first pitch control signal based on a nacelle acceleration signal.

In other words, the first linear time invariant control system generates the first pitch control based on both the rotor speed error signal and the nacelle acceleration signal.

By also using the nacelle acceleration signal, i.e. the signal driving the tower damping module, a better coupling between the rotor speed control and the tower damping control can be achieved (Multiple-Input-Multiple-Output or MIMO control).

According to a further embodiment of the invention, the first linear time invariant control system and the second linear time invariant control system are generated utilizing H-infinity methods and Quantitative Feedback Theory.

By using H-infinity methods, i.e. a control methodology for controller synthesis based on mathematical optimization to achieve stabilization with guaranteed performance, and Quantitative Feedback Theory (QFT), i.e. a frequency domain control technique that allows to achieve a desired robust design over a specified region of plant uncertainty, to generate the first and second linear time invariant control systems, it is possible to obtain a very effective controller capable of reliably dealing with wind disturbance rejection while damping the first tower eigen mode on a level that is not possible with conventional PI/PID-based controllers.

According to a further embodiment of the invention, the H-infinity and Quantitative Feedback Theory methods are utilized iteratively or exclusively to, for a plurality of selected operating points, define frequency domain tower load specifications and synthesize controllers based on wind turbine linear models.

The wind turbine linear models are obtained from an aeroelastic model of the wind turbine for all relevant operating points.

While exclusive use of the H-infinity and Quantitative Feedback Theory methods may be effective, iterative application of the two techniques has shown particularly advantageous. In the latter case, draft controllers (i.e. initial control units) are synthesized using H-infinity mathematical optimization for all operating points. Then, for all operating points, the specification for the draft controllers are refined using QFT methodology for relations from pitch and wind to rotor speed, tower load and acceleration, and pitch position.

According to a second aspect of the invention, there is provided a wind turbine comprising a rotor and a nacelle arranged on a tower, the tower having a fundamental frequency close to or below a rated rotational frequency of the rotor. The wind turbine further comprises a controller according to the first aspect or any of the exemplary embodiments described herein.

This aspect of the invention utilizes the advantageous first aspect as discussed above to provide robust control of a wind turbine with a soft-soft tower.

According to a third aspect of the invention, there is provided a method of controlling a wind turbine comprising a rotor and a nacelle arranged on a tower, the tower having a fundamental frequency close to or below a rated rotational frequency of the rotor. The method comprises (a) generating, in a rotor speed control module comprising a first linear time invariant control system, a first pitch control signal based on a rotor speed error signal, (b) generating, in a tower damping module comprising a second linear time invariant control system, a second pitch control signal based on a nacelle acceleration signal, and (c) outputting a pitch control signal based on the first pitch control signal and the second pitch control signal.

This aspect of the invention is generally based on the same idea as the first aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a rotor speed control module of a wind turbine controller according to an embodiment of the present invention.

Figure 2 shows a tower damping module of a wind turbine controller according to an embodiment of the present invention.

Detailed Description

The illustration in the drawing is schematic. It is noted that in different figures, similar or identical elements are provided with the same reference numerals or with reference numerals which differ only within the first digit.

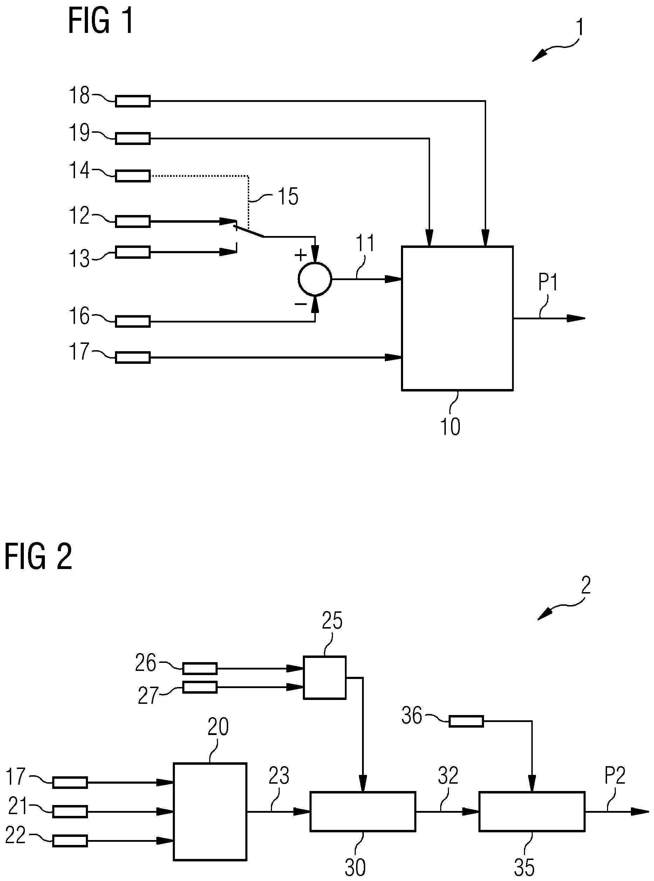

The present invention provides a controller for a wind turbine comprising a rotor and a nacelle arranged on a tower, the tower having a fundamental frequency close to or below a rated rotational frequency of the rotor. Such a tower is commonly referred to as a soft-soft tower. The controller comprises two control modules, namely a rotor speed control module 1 as shown in Figure 1 and discussed below, and a tower damping module 2 as shown in Figure 2 and discussed further below. The rotor speed control module 1 generates and outputs a first pitch control signal P1. The tower damping module 2 generates and provides a second pitch control signal P2. The first pitch control signal P1 and the second pitch control P2 are combined, in particular added, by an output module (not shown) and passed on to the pitch regulating system of the wind turbine, preferably as an incremental signal indicating a signed amount of adjustment to be applied to the pitch.

Figure 1 shows a rotor speed control module 1 of a wind turbine controller according to an embodiment of the present invention. The rotor speed control module 1 comprises a (first) linear time invariant control system 10 coupled to receive a rotor speed error signal 11 as an input, and optionally a nacelle acceleration signal 17 as further input, as a basis for generating a (first) pitch control signal P1. The rotor speed error signal 11 is obtained as a difference between either a filtered rotor speed signal 12 or a rotor speed signal 13 and a rotor speed reference signal 16. Whether the filtered rotor speed signal 12 or the (unfiltered) rotor speed signal 13 is used, is determined by control signal 14 which controls the switch 15. The rotor speed reference signal 16 is the current set point for the controller. The linear time invariant control system 10 further receives a power loop pitch control signal 18 that is used to develop an anti-windup strategy in the control, and a filtered pitch control signal 19 that provides information about the operating point of the wind turbine.

In this exemplary embodiment, the (first) linear time invariant control system 10 is a state space control system comprising a number of state space control units, each state space control unit being developed for a particular operating point, such as low wind speeds, rated wind speeds, and high wind speeds. The state space control system 10 includes a scheduling control scenario which interpolates the different state space control units (or state-space represented controllers) according to predetermined interpolation control laws to generate a non-linear pitch control action. The below formulas show the state-space representation of one of these control units that are interpolated in the state space control system 10.

$$X_{SControl}(k+1) = Ad_{SControl}\, X_{SControl}(k) + Bd_{SControl}\begin{bmatrix} GenSpeedError(k) \\ NacXAcc(k) \end{bmatrix}$$

$$Pitch_{SControl}(k+1) = Cd_{SControl}\, X_{SControl}(k) + Dd_{SControl}\begin{bmatrix} GenSpeedError(k) \\ NacXAcc(k) \end{bmatrix}$$

Here, k+1 is the present sample and k the last sample. $Ad_{SCon\text{-}trol}$, $Bd_{SControl}$, $Cd_{SControl}$ and $Dd_{Scontrol}$ are the discretized state space matrices which represent the controller dynamics. $X_{SCon\text{-}trol}(k+1)$ is the present vector of controller states and $X_{SCon\text{-}trol}(k)$ is the vector of states of the last sample. $Pitch_{SCon\text{-}trol}(k+1)$ is the output P1 from the control system 10. $Gen\text{-}SpeedError(k)$ is the rotor speed error and $NacXAcc(k)$ is the nacelle acceleration (in the fore-aft direction).

Figure 2 shows a tower damping module 2 of a wind turbine controller according to an embodiment of the present invention. The tower damping module 2 comprises a (second) linear time invariant control system 20 coupled to receive the nacelle acceleration signal 17, a pitch control signal 21 (which is equal to P1 in Fig. 1), and an operational state signal 22 as inputs. Based on these inputs, the linear time invariant control system 20 determines an output signal 23 which is indicative of a pitch control correction amount to be applied to the first pitch control signal P1 determined by the rotor speed control module 1 (as described above) in order to reduce or eliminate undesirable impact from the oscillating tower movement. The output 23 is passed through a moving notch filer 30 to filter out a selected multiple of the rotor rotational frequency. The moving notch filter receives information on the particular frequency from multiplier 25 which multiplies a low-pass filtered rotor speed signal 26 and a factor 27, such as e.g. one or three, and inputs the resulting frequency to the filter 30. The filtered output signal 32 is passed on to phase delay network 35 which, dependent on a filtered wind speed signal 36 as an indication of the operating point of the wind turbine, applies a gain over a frequency range to the filtered output signal 32. The resulting output P2 from the phase delay network 35 is the (second) pitch control signal P2 that serves to reduce or eliminate the influence of tower oscillating movement on the pitch control of the wind turbine.

In this exemplary embodiment, the (second) linear time invariant control system 20 is a state space control system comprising a number of state space control units, each state space control unit being developed for a particular operating point, such as low wind speeds, rated wind speeds, and high wind speeds. The state space control system 20 includes a scheduling control scenario which interpolates the different state space control units (or state-space represented controllers) according to predetermined interpolation control laws to generate a non-linear pitch control action. The below formulas show the state-space representation of one of these control units that are interpolated in the state space control system 20.

$$X_{ATD}(k+1) = Ad_{ATD}\, X_{ATD}(k) + Bd_{ATD} NacXAcc(k)$$

$$Pitch_{ATD}(k+1) = Cd_{ATD}\, X_{ATD}(k) + Dd_{ATD} NacXAcc(k)$$

Here, k+1 is the present sample and k the last sample. $Ad_{ATD}$, $Bd_{ATD}$, $Cd_{ATD}$ and $Dd_{ATD}$ are the discretized state space matrices which represent the controller dynamics. $X_{ATD}(k+1)$ is the present vector of controller states and $X_{ATD}(k)$ is the vector of states of the last sample. $Pitch_{ATD}(k+1)$ is the output 23 from the control system 20. $NacXAcc(k)$ is the nacelle acceleration (in the fore-aft direction).

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1.    A controller for a wind turbine comprising a rotor and a nacelle arranged on a tower, the tower having a fundamental frequency close to or below a rated rotational frequency of the rotor, the controller comprising
a rotor speed control module (1) comprising a first linear time invariant control system (10) adapted to generate a first pitch control signal (P1) based on a rotor speed error signal (11),
a tower damping module (2) comprising a second linear time invariant control system (20) adapted to generate a second pitch control signal (P2) based on a nacelle acceleration signal (17), and
an output module adapted to output a pitch control signal based on the first pitch control signal and the second pitch control signal.

2.    The controller according to the preceding claim, wherein the first linear time invariant control system (10) comprises a plurality of first linear time invariant control units and a first interpolation unit, wherein the first interpolation unit is adapted to generate the first pitch control signal based on an interpolation of respective outputs of the first linear time invariant control units.

3.    The controller according to any of the preceding claims, wherein the second linear time invariant system (20) comprises a plurality of second linear time invariant control units and a second interpolation unit, wherein the second interpolation unit is adapted to generate the second pitch control signal based on an interpolation of respective outputs of the second linear time invariant control units.

4.    The controller according to claim 2 or 3, wherein the first and/or second interpolation unit is adapted to apply interpolation based on an operating point of the wind turbine, in particular based on the pitch control signal and/or a wind speed signal.

5.    The controller according to any of claims 2 to 4, wherein the plurality of first linear time invariant control units is a plurality of first state space control units, and/or wherein the plurality of second linear time invariant control units is a plurality of second state space control units.

6.    The controller according to any of the preceding claims, wherein the nacelle acceleration signal (17) is indicative of a fore-aft acceleration of the nacelle.

7.    The controller according to any of the preceding claims, wherein the tower damping module (2) is adapted to dampen

the 1st fore-aft eigen mode of the tower.

8. The controller according to any of the preceding claims, wherein the output module is adapted to add the first (P1) and second (P2) pitch control signals to generate the pitch control signal.

9. The controller according to any of the preceding claims, wherein the tower damping module (2) further comprises a moving notch filter (30) adapted to filter a selected multiple of the rotor rotational frequency from the second pitch control signal (P2).

10. The controller according to any of the preceding claims, wherein the tower damping module further comprises a phase delay network (35) adapted to apply a gain over a frequency range to the second pitch control signal in dependency of an operating point of the wind turbine, in particular based on the pitch control signal and/or a filtered wind speed signal.

11. The controller according to any of the preceding claims, wherein the first linear time invariant control system (10) is further adapted to generate the first pitch control signal (P1) based on a nacelle acceleration signal (17).

12. The controller according to any of the preceding claims, wherein the first linear time invariant control system (10) and the second linear time invariant control system (20) are generated utilizing H-infinity methods and Quantitative Feedback Theory.

13. The controller according to the preceding claim, wherein the H-infinity and Quantitative Feedback Theory methods are utilized iteratively or exclusively to, for a plurality of selected operating points, define frequency domain tower load specifications and synthesize controllers based on wind turbine linear models.

14. A wind turbine comprising a rotor and a nacelle arranged on a tower, the tower having a fundamental frequency close to or below a rated rotational frequency of the rotor, the wind turbine further comprising a controller according to any of the preceding claims.

15. A method of controlling a wind turbine comprising a rotor and a nacelle arranged on a tower, the tower having a fundamental frequency close to or below a rated rotational frequency of the rotor, the method comprising
generating, in a rotor speed control module (1) comprising a first linear time invariant control system (10), a first pitch control signal (P1) based on a rotor speed error signal (11),
generating, in a tower damping module (2) comprising a second linear time invariant control system (20), a second pitch control signal based on a nacelle acceleration signal (17), and
outputting a pitch control signal based on the first pitch control signal (P1) and the second pitch control signal (P2) .

FIG 1

1

18 ⊏▭

19 ⊏▭

14 ⊏▭

15

12 ⊏▭

13 ⊏▭

+

−

11

16 ⊏▭

17 ⊏▭

10

P1

FIG 2

2

25

26 ⊏▭

27 ⊏▭

20

36 ⊏▭

17 ⊏▭

21 ⊏▭

22 ⊏▭

23

30

32

35

P2

Europäisches
Patentamt

European
Patent Office

Office européen
des brevets

# EUROPEAN SEARCH REPORT

Application Number

EP 20 38 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/088165 A1 (NIELSEN THOMAS S BJERTRUP [DK] ET AL) 19 March 2020 (2020-03-19) * paragraphs [0003], [0040] - [0042], [0046], [0051], [0052] * ----- | 1,6,7, 14,15 | INV. F03D7/04 G05B13/04 |
| A | US 2020/011296 A1 (CAPONETTI FABIO [DK] ET AL) 9 January 2020 (2020-01-09) * paragraphs [0001], [0007], [0018], [0020], [0031], [0033], [0034], [0046] * * figures 1A,1B * ----- | 1,6,7, 10,14,15 | |
| Y | US 2006/033338 A1 (WILSON KITCHENER C [US]) 16 February 2006 (2006-02-16) * paragraphs [0018], [0039], [0048], [0094] * * abstract * ----- | 1,6,7, 14,15 | |
| A | US 2012/029892 A1 (THULKE MATTHIAS [DE]) 2 February 2012 (2012-02-02) * paragraphs [0001], [0104], [0105], [0126] * ----- | 1,2,14, 15 | TECHNICAL FIELDS SEARCHED (IPC) F03D G05B |

The present search report has been drawn up for all claims

| Place of search | Date of completion of the search | Examiner |
|---|---|---|
| The Hague | 30 October 2020 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 38 2470

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | | Publication date | Patent family member(s) | | Publication date |
|---|---|---|---|---|---|
| US 2020088165 | A1 | 19-03-2020 | CN | 110446853 A | 12-11-2019 |
| | | | EP | 3601789 A1 | 05-02-2020 |
| | | | US | 2020088165 A1 | 19-03-2020 |
| | | | WO | 2018171852 A1 | 27-09-2018 |
| US 2020011296 | A1 | 09-01-2020 | CN | 110494648 A | 22-11-2019 |
| | | | EP | 3580452 A1 | 18-12-2019 |
| | | | US | 2020011296 A1 | 09-01-2020 |
| | | | WO | 2018145710 A1 | 16-08-2018 |
| US 2006033338 | A1 | 16-02-2006 | NONE | | |
| US 2012029892 | A1 | 02-02-2012 | CN | 102788697 A | 21-11-2012 |
| | | | DK | 2525087 T3 | 30-04-2018 |
| | | | EP | 2525087 A2 | 21-11-2012 |
| | | | ES | 2664820 T3 | 23-04-2018 |
| | | | US | 2012029892 A1 | 02-02-2012 |

EPO FORM P0459

For more details about this annex : see Official Journal of the European Patent Office, No. 12/82